# EUROPEAN PATENT APPLICATION

(11) **EP 1 575 141 A1**
(43) Date of publication of application: **14.09.2005**
(21) Application number: 05251008.8
(22) Date of filing: 22.02.2005
(51) Int. Cl.: H02H 9/02, H02H 3/087

(54) **Protection against surges of electric current**

(30) Priority: 09.03.2004 US 796230
(71) Applicant: LUCENT TECHNOLOGIES INC., Murray Hill, New Jersey 07974-0636 (US)
(72) Inventor: Devine, James Michael, Blairstown, NJ 07825 (US); Menegus, Jeffrey J., Belvidere, NJ 07823 (US); Olivieri, John A., Hackettstown, NJ 07840 (US)
(74) Representative: Watts, Christopher Malcolm Kelway

(57) **Abstract**

A positive temperature coefficient (PTC) device is connected in parallel with the circuit breaker of e.g., a power-conditioning circuit. Such an arrangement allows pre-charging of the capacitors in the circuit while the circuit is switched off, so that a current surge is avoided when the circuit is powered on. In the event of overcurrent due to a circuit fault, the PTC device will switch to a high-resistance state, which will protect the circuit.

## Description

### Field of the Invention

This invention relates to electrical power equipment, and more specifically, to switching and power-conditioning equipment.

### Art Background

It often happens in a system with a direct current (dc) power supply that when a load is switched on, there is a temporary surge of current as capacitors in the powered circuit begin to charge. Such a current surge may have undesirable effects. For example, if the circuit is protected against faults by a current-activated, interruptive device such as a fuse or circuit breaker, the current surge may activate the device and cause a circuit interruption, even though there is no danger.

Problems of the kind described above are encountered, among other places, in remote installations which include dc power-conditioning circuitry. Cellular base stations, for example, employ power conditioning circuitry in which hundreds, or even thousands, of microfarads of capacitance are charged when the installation is switched on. The charging of such large amounts of capacitance can lead, in some cases, to peak currents of 1000 amperes or more.

It is conventional to use a circuit breaker to protect such an installation against circuit faults. However, there is a need to protect against the tendency of a circuit breaker to open the circuit during current surges that occur upon powering the circuit up.

There have been past attempts to solve this problem. In one approach, the capacitors are charged in a pre-charging operation performed before providing full power to the installation. The charging current is supplied by manually activating a pushbutton switch, which permits current to flow through a current-limiting resistance into the capacitors. This approach suffers from the disadvantages that it requires operator intervention, and may be ineffective if the operator failed to allow enough time for the capacitors to charge.

In a second approach, active techniques are used to limit the so-called "inrush" current that charges the capacitors. In the active approach, a switchable resistance is provided. Initially, the capacitors are charged through a relatively high resistance to limit the inrush current. Then, the resistance is switched to a low value to allow operation of the circuit. This approach suffers from the disadvantages that it involves relatively expensive circuit elements and by requiring a switching operation, it adds complexity to the procedures for powering up an installation.

Thus, there remains a need for a simple and inexpensive approach to the problem of how to maintain continuity of an interruptively-protected circuit during a current surge initiated when the circuit is powered up.

### Summary of the Invention

We have discovered that a positive temperature coefficient (PTC) device can be used to provide the needed protection simply and cheaply. The PTC device is connected in parallel with the circuit breaker (or fuse-switch combination or other protective device). Such an arrangement allows pre-charging of the capacitors in the circuit while the circuit is switched off, so that a current surge is avoided when the circuit is switched on. In the event of overcurrent due to a circuit fault, the PTC device will switch to a protective high-resistance state when, e.g., the, circuit breaker activates and interrupts the circuit.

### Brief Description of the Drawing

FIG. 1 is a simplified circuit diagram of a power-conditioning circuit including a PTC device according to the invention in one embodiment.
FIG. 2 is a representative graph of resistance versus temperature for a polymeric PTC device.

### Detailed Description

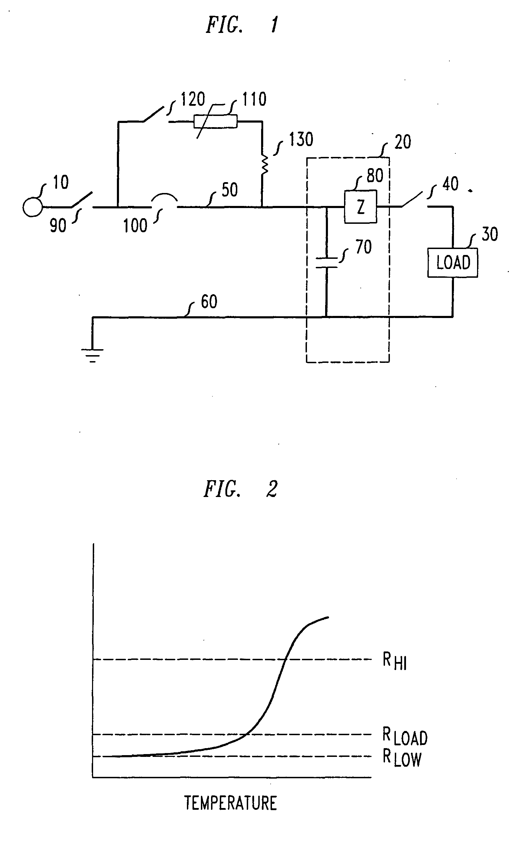

In the circuit diagram of FIG. 1, reference numeral 10 indicates the input point of a dc power voltage V₀, which is conditioned by conditioning circuit 20 and then used to power load 30. Load 30 may be isolated from circuit 20 by opening switch 40. However, in typical installations of, e.g., telecommunications equipment, switch 40 will in certain cases be closed, and power to load 30 controlled by controlling the power to circuit 20.

The conditioning by circuit 20 may be of various kinds, but will typically include dc voltage regulation. In typical applications, conditioning circuit 20 will be characterized by substantial amounts of capacitance between voltage rail 50 and ground rail 60. The capacitance between rails 50 and 60 has been symbolically represented in the figure by capacitance element 70. Other forms of impedance in conditioning circuit 20 have been summarized in the figure by impedance element 80.

As seen in the figure, switch 90 and circuit breaker 100 are provided to control the application of voltage V₀ to the conditioning circuit and, through the conditioning circuit, to the load. When switch 90 and circuit breaker 100 are both closed, the installation represented by the circuit diagram is said to be "powered up;" when either or both of switch 90 and circuit breaker are open, the installation is said to be "powered down."

In many installations typical, for example, for housing telecommunications equipment, switch 90 is provided, if at all, mainly to isolate circuit breaker 100 for maintenance and the like. In such cases, switch 90 will normally be closed and circuit breaker 100 will be used to switch circuit 20 on and off.

Circuit breaker 100 is one example of a current-activated, interruptive protection device for protecting the installation from overcurrents due to circuit faults. Because a circuit breaker is the typical device used in remote installations of, e.g., telecommunications equipment, we have taken that as an example, without limitation, for purposes of the following discussion. However, it should be noted that the use of other protective devices, such as fuses, also lies within the scope of the present invention. Of course, if the protective device is a fuse or other device that cannot be opened and closed at will, then switch 90 or the like is essential for controlling power to circuit 20. For example, switch 90 may be provided as part of a fuse-switch combination.

When used as a control device, circuit breaker 100 can be opened at will to switch the installation off, and can be closed or "thrown" at will to switch the installation on. In use as a protective device, the circuit breaker will of course automatically open when it senses an overcurrent in circuit 20.

In the present example, switch 90 is normally closed, and the installation is powered up by closing circuit breaker 100.

If the capacitors represented by element 70 of the figure are substantially uncharged, then as noted above, an inrush current on charging up can in some cases cause an overcurrent shutdown on the dc source represented in FIG. 1 by element 10. This overcurrent shutdown of the dc source will affect all components powered from element 10. Such a result is avoided, however, by adding PTC device 110 to the circuit. As shown in the figure, device 110 is connected in parallel with circuit breaker 100 and is connected to power input 10 by closing switch 120. Switch 120 is optionally provided as a means to isolate device 110 without isolating circuit breaker 100. In some cases it will be desirable to add optional resistor 130 in series with the PTC device to limit current through it and possibly also limit damage to the PTC device in adverse conditions. However, adding such series resistance will also have the undesirable effect of prolonging the charging time of capacitance 70.

One operation in which PTC device 110 provides advantages is the installation of a new circuit breaker 100. Advantageously, the new circuit breaker is part of an integral unit which also includes PTC device 110 wired in parallel with the circuit breaker as shown in FIG. 1. Installation is performed with circuit breaker 100 in the open position. However, it will in at least some cases be desirable to close the pertinent switches such that current is permitted to flow through the PTC device during installation. As a consequence, capacitance 70 will already be substantially charged by the time circuit breaker 100 is closed, and excessive inrush current will be avoided.

Another operation in which PTC device 110 provides advantages is the restoration of power to circuit 20 by closing circuit breaker 100 after it has been opened for, e.g., a maintenance or repair task. If during the breaker-open period current has been permitted to flow through the PTC device, then closure of the circuit breaker will not cause an intolerable inrush current.

PTC devices appropriate for the use described here can typically dissipate up to several watts of power while remaining in a low-resistance state with a resistance, typically, in the range 1-20 ohms. Dc input voltages typical for, e.g., telecommunications installations generally lie in the range 15-60 volts. Thus, if there is no other resistance to limit the charging current of capacitance 70, it would be typical for PTC device 110 and optional resistor 130 to have a combined resistance in the range 1-50 ohms.

Values of capacitance 70 typically encountered in, e.g., telecommunications installations are in the range of 15-25 millifarads.

Thus, in the example given above, the RC time constant for charging capacitance 70 to 63% charge will lie in the range 0.015-1.25 seconds. Manual operations similar to those described above will therefore afford ample time to charge the capacitance enough to avoid an inrush current capable of tripping circuit breaker 100 or of causing other circuit interruptions or loss of dc power.

Turning now to FIG. 2, it will be seen that the resistance of a PTC device responds to increasing temperature in a highly non-linear fashion. As it warms up from ambient temperature, the device eventually reaches a threshold above which resistance increases very steeply with further heating. In general, the device temperature is linearly related to the rate of power dissipation in the device, which in turn is proportional to the product of the resistance and the square of the current in the device. Thus, the threshold behavior with respect to current will be even steeper than that with respect to temperature. At high enough current levels, the PTC device will "trip," going from a state in which the resistance is, typically, less than 20 ohms to a state in which the resistance is thousands of ohms.

Accordingly, there are indicated on the graph of FIG. 2 three levels of resistance. R_{Load} represents the resistance of a load which is limiting the current through the PTC device during normal operation. R_{LOW} represents the resistance of the PTC device while operating in its low-resistance state, with current through the device limited by R_{Load}. R_{HI} represents the resistance of the PTC device under a fault condition that has caused the PTC device to switch to a high-resistance state, such that R_{HI} is now limiting the current. In appropriately chosen PTC devices, R_{HI} can be two or three orders of magnitude greater than R_{LOW}.

PTC device 110 will provide circuit protection during, e.g., the time interval after switch 120 has been closed but before breaker 100 has been closed. If a circuit fault occurs during that time interval which causes a large sustained current to flow through PTC device 110, the PTC device will switch to its high-resistance state and limit current flow to a generally safe level.

During the time interval between closure of switch 120 and closure of breaker 100, capacitance 70 will charge. Although the charging current may initially exceed the rated maximum current at which the PTC device will remain in its low-resistance state, the charging current will rapidly decay to a much lower value. The PTC device has a thermal time constant which is typically several seconds, and which will typically be longer than the time constant for charging capacitance 70. Consequently, there will rarely be suffiicent Joule heating to trip the PTC device into its high-resistance state during the charging period. Even if the PTC device is tripped, it should be noted that some charging current will still flow. In fact, if there is sufficient heat dissipation in the PTC device to maintain it in its high-resistance state―typically about one watt―then, in general, there will also be sufficient charging current to prevent an intolerable surge when breaker 100 is closed. Eventually, of course, as capacitance 70 approaches full charge, the charging current must fall and the PTC device must return to its low-resistance state.

After breaker 100 has been closed to power up the circuit, switch 120 can safely remain in the closed position; that is, PTC device 110 can safely continue to draw current in parallel with the circuit breaker. Provided the current remains at normal operating levels, a PTC device selected to have appropriate operating characteristics will remain in a low-resistance state. In the event of a circuit fault, and assuming the circuit is not broken by other overloaded circuit elements, the resulting overcurrent will activate breaker 100, causing it to open. All current will now be directed through PTC device 110. As a consequence, device 110 will heat up and switch to its high-resistance state. In that state, the PTC device will limit the current to a generally safe level. After power to the circuit has been shut down, or after the fault has been repaired, the PTC device will cool and return to its low-resistance state in a span of, typically, a few seconds to a few minutes.

One type of PTC device useful in the present context is a polymeric PTC device. Such devices are available from numerous vendors. One such vendor is Tyco Electronics of Harrisburg, Pennsylvania.

## Claims

1. Apparatus, comprising:
a direct current (dc) electric circuit which includes one or more capacitive elements and which is configured to deliver electric power to a load;
a protective circuit element configured to interrupt power to the dc circuit in the event that electric current drawn by the circuit from a power source exceeds a threshold; and
a positive temperature coefficient (PTC) device connected in parallel to the protective circuit element, wherein:
the PTC device is configured such that before current is admitted to the circuit through the protective element, there can be admitted to the circuit through the PTC device a current at least sufficient to charge the capacitive elements; and
the PTC device is further configured to substantially increase in electrical resistance in the event that the current passing through it exceeds a threshold.

2. A method for modifying an electrical installation of the kind which includes a direct current (dc) circuit and a protective circuit element configured to interrupt power to the dc circuit in the event that current drawn by the circuit from a power source exceeds a threshold, the method comprising:
adding a positive temperature coefficient (PTC) device to the installation in a configuration in which the PTC device is connected in parallel to a protective circuit element such that before current is admitted to the circuit through the protective element, there can be admitted to the circuit through the PTC device a current at least sufficient to charge the capacitive elements.
